# EUROPÄISCHE PATENTSCHRIFT

(11) **EP 4 463 256 B1**
(45) Veröffentlichungstag und Bekanntmachung des Hinweises auf die Patenterteilung: **11.03.2026**
(21) Anmeldenummer: 23700274.6
(22) Anmeldetag: 11.01.2023
(51) Int. Cl.: B01J 19/00

(54) **TRANSFERVORRICHTUNG, VERFAHREN UND VERWENDUNG EINER TRANSFERVORRICHTUNG ZUM ÜBERFÜHREN WENIGSTENS EINES FUNKTIONSELEMENTS IN EINE PROZESSKAMMER**
TRANSFER DEVICE, METHOD, AND USE OF A TRANSFER DEVICE FOR TRANSFERRING AT LEAST ONE FUNCTIONAL ELEMENT INTO A PROCESS CHAMBER
DISPOSITIF DE TRANSFERT, PROCÉDÉ ET UTILISATION D'UN DISPOSITIF DE TRANSFERT POUR TRANSFÉRER AU MOINS UN ÉLÉMENT FONCTIONNEL DANS UNE CHAMBRE DE TRAITEMENT

(30) Priorität: 12.01.2022 DE 102022100678
(43) Veröffentlichungstag der Anmeldung: 20.11.2024
(73) Patentinhaber: TT Innovation AG, 6343 Rotkreuz (CH)
(72) Erfinder: TONDERA, Marc, 4125 Riehen (CH); SCHNEIDLER, Tobias Jan, 6332 Hagendorn (CH); CARLI, Julia Annette, 4053 Basel (CH); MÜLLER, Mathieu, 68510 Sierentz (FR); LEUENBERGER, Philipp, 4052 Basel (CH); RETHORET, Christophe, 68500 Issenheim (FR); ZELLER, Mike, 4246 Wahlen (CH)
(74) Vertreter: Mertzlufft-Paufler, Cornelius
(86) Internationale Anmeldenummer: PCT/EP2023/050556
(87) Internationale Veröffentlichungsnummer: WO 2023/135176

(56) Entgegenhaltungen:
- EP-A1- 3 789 305
- US-A1- 2002 159 868
- US-A1- 2009 298 129

## Beschreibung

Die Erfindung betrifft eine Transfervorrichtung zum Überführen wenigstens eines Funktionselements in eine Prozesskammer, wobei das wenigstens eine Funktionselement austauschbar an einem Elementträger angeordnet ist und der Elementträger aus einer Ausgangsstellung in eine Endstellung, beispielsweise eine Arbeitsstellung oder eine Zwischenstellung auf dem Weg zu einer Arbeitsstellung, überführbar ist.

In vielen Industriezweigen, insbesondere in der pharmazeutischen Industrie, sind trotz einer Vielzahl automatisierter Prozesse manuelle Tätigkeiten noch immer notwendig. So werden beispielsweise Bauteile aseptischer Befüllvorrichtungen manuell in eine Prozesskammer eines Containments, Reinraums oder eines Isolators überführt und anschließend zusammengebaut. Manuelle Eingriffe stellen ein erhebliches Risiko dar, da einerseits die Wahrscheinlichkeit einer Produktkontamination erhöht sein kann und andererseits die Gesundheit von Mitarbeitern gefährdet ist, insbesondere bei Arbeiten mit toxischen Komponenten. Auch aus prozessökonomischer Sicht sind manuelle Arbeiten in Prozesskammern zeitaufwendig und kostspielig.

Aus der US 2009/298 129 A1 ist ein System und Verfahren zur automatisierten Verarbeitung von Nukleinsäuren und anderen Proben vorbekannt, das einen Einwegbehälter mit einer Schale und einer flexiblen Barriere umfasst. Die Barriere ist so konfiguriert, dass sie mit einer Oberkante der Schale abschließt und einen geschlossenen, aseptischen Arbeitsbereich innerhalb der abgedichteten Schale bildet. An der Innenseite der Barriere kann ein Pipettenkopf und/oder ein anderes Gerät zur Handhabung von Proben angebracht werden, und die Barriere kann eine Schnittstelle für einen Roboterarm oder ein anderes Gerät enthalten. Wenn die Barriere über der Schale versiegelt ist, trennt sie den Inhalt der Schale von dem Roboter oder einem anderen Handhabungsgerät. Die Barriere kann flexibel sein und es dem Roboterarm ermöglichen, den Pipettenkopf im gesamten Arbeitsbereich des Tabletts zu bewegen. Alle Proben, Reagenzien, Pipettenspitzen und andere Werkzeuge oder Geräte zur Verarbeitung von Nukleinsäureproben können während der Verarbeitung in dem geschlossenen Fach des Behälters verbleiben.

Aus der EP 3 789 305 A1 ist eine Anlage mit einem Containment zum aseptischen Umfüllen eines Pulvers, nämlich zur Entleerung eines mit Pulver gefüllten Behälters in einen Sammelbehälter vorbekannt und/oder zum Befüllen eines Behälters mit Pulver aus einem Vorratsbehälter bestimmt. Das Containment weist eine von einem Gehäuse umgebene Arbeitskammer auf. Im Containment ist ein Roboter installiert, der eine über einen Schwenkbereich bewegliche Armanordnung besitzt. Bei Vorhandensein eines Sammelbehälters hat dieser einen aus der Arbeitskammer zuführenden Einlass und bei Vorhandensein eines Vorratsbehälters hat dieser einen in die Arbeitskammer abführenden Auslass. Der Behälter ist zumindest mit einen ersten Verschlusselement verschließbar. Die Armanordnung ist mit einem Werkzeugträger verbunden, der an seiner Basis zumindest mit Klemmelementen zum Ergreifen des Behälters, einem Vakuumheber zum Ergreifen des ersten Verschlusselements sowie einem Passivteil einer Doppelklappe ausgestattet ist. Am Einlass in den Sammelbehälter und/oder am Auslass des Vorratsbehälters ist ein Transferkopf montiert, die jeweils in die Arbeitskammer hineinragen. Das Passivteil bildet zusammen mit einem im Transferkopf enthaltenen Aktivteil die Doppelklappe.

Aus der US 2001/159 868 A1 ist ein Arbeitskammersystem mit einer Roboterhand, die durch eine Öffnung in die Arbeitskammer hineinragt vorbekannt, wobei eine Dichtungsvorrichtung vorgesehen, mit der ferngesteuert eine Dichtung hergestellt und entfernt werden kann. Die Dichtungsvorrichtung umfasst: ein flexibles Dichtungselement, mittels dessen ein inneres Durchführungsringelement mit dem Rand der Öffnung verbunden ist; mindestens zwei Kupplungselemente, die an dem Durchführungsringelement angebracht sind, und mindestens ein Verriegelungselement, das mit der Roboterhand verbunden ist und das mittels Positionierungselementen zum Kuppeln der Roboterhand mit dem Durchführungsringelement mittels der Kupplungselemente positionierbar ist.

Die Erfindung betrifft weiterhin ein Verfahren zur Übergabe wenigstens eines Funktionselements an einer Transferöffnung zur Überführung in eine Prozesskammer, wobei das Funktionselement durch die Transfervorrichtung zu der Transferöffnung überführt wird und das Funktionselement anschließend von einer Transportvorrichtung in die Prozesskammer aufgenommen wird.

Beispielsweise kann die Transportvorrichtung an der Prozesskammer, insbesondere an einem Boden oder einer Trennwand, befestigt sein.

Die Erfindung betrifft weiterhin die Verwendung einer Transfervorrichtung zum Überführen wenigstens eines Funktionselements in eine Prozesskammer.

Es ist daher Aufgabe der Erfindung, Überführungen und Arbeiten in Prozesskammern zu verbessern.

Zur Lösung der genannten Aufgabe sind erfindungsgemäß die Merkmale des Anspruchs 1 vorgesehen. Insbesondere wird somit zur Lösung der genannten Aufgabe bei einer Transfervorrichtung der eingangs beschriebenen Art erfindungsgemäß vorgeschlagen, dass das wenigstens eine Funktionselement in der Endstellung, insbesondere der Arbeitsstellung, teilweise in der Prozesskammer und teilweise außerhalb der Prozesskammer angeordnet ist. Hierdurch befindet sich ein Teil des Funktionselements auch in Endstellung, insbesondere Arbeitsstellung, außerhalb der Prozesskammer, was vorteilhaft ist, da weniger Material in die Prozesskammer gelangt. Zudem kann vorteilhaft die Transfervorrichtung außerhalb von der Prozesskammer ausgebildet sein, wodurch noch weniger Material in die Prozesskammer gelangen kann. Insgesamt kann somit durch eine erfindungsgemäße Transfervorrichtung besonders wenig Material und somit potenzielle Kontaminationen in eine Prozesskammer überführt werden, was insbesondere das Arbeiten in Isolatoren der pharmazeutischen Industrie verbessert und den Produkteschutz, und somit die Patientensicherheit erhöht. Ferner kann durch den geringeren Anteil von überführtem Material in der Prozesskammer ein unidirektionaler Luftstrom (turbulenzarme Verdrängungsströmung) entsprechend weniger gestört werden. Außerdem kann ein "first air contact", also ein erster Kontakt des aus einem HEPA-Filter kommenden Luftstroms mit einer Oberfläche innerhalb der Prozesskammer, auf einer größeren Fläche möglich sein.

Der prozessrelevante, unidirektionale Luftstrom und die Wahrung des "first air contacts" wird somit nur minimal beeinflusst.

Eine Endstellung kann beispielsweise als Endpunkt einer Transferbewegung der Transfervorrichtung charakterisierbar sein. Eine Arbeitsstellung kann beispielsweise als eine Stellung, in der das Funktionselement seine bestimmungsmäßige Funktion, beispielsweise einen Füllvorgang, ausführt, charakterisierbar sein. Weitere, nicht abschließende Beispiele für Endstellungen können weitere Arbeitsstellungen in diesem Sinn oder Zwischenstellungen auf einem Weg zu einer Arbeitsstellung in diesem Sinn umfassen.

Weiterhin kann bei einer außerhalb der Prozesskammer befindlichen Transfervorrichtung vorteilhaft sein, dass deren Ausgestaltung (z.B. Form, Gewicht und Größe) zumindest unabhängig vom Innenraum der Prozesskammer realisiert sein kann. Ferner ist es möglich eine erfindungsgemäße Transfervorrichtung schnell und einfach zwischen Isolatoren zu tauschen, ohne in eine Prozesskammer eingreifen zu müssen.

Somit kann eine Transfervorrichtung optimal an Kundenwünsche angepasst sein.

Eine erfindungsgemäße Transfervorrichtung kann jedoch auch in der Prozesskammer angeordnet sein. Somit kann außerhalb der Prozesskammer Platz eingespart werden, was dann von Vorteil ist, wenn beispielsweise Vorprozesse außerhalb der Prozesskammer verrichtet werden müssen.

Generell ist eine Transfervorrichtung dazu ausgebildet, ein an einen Elementträger verbundenes Funktionselement in eine Prozesskammer zu überführen. Dabei kann die Transfervorrichtung selbst eine Ortsveränderung vornehmen, um die Überführung des Funktionselements zu vollziehen und/oder die Transfervorrichtung bewegt den Elementträger aus einer Ausgangsstellung in eine Endstellung, insbesondere Arbeitsstellung. Eine ortsveränderbare Transfervorrichtung kann dabei jede dem Fachmann bekannte Transfervorrichtung sein. Alternativ oder zusätzlich kann eine Transfervorrichtung auch eine Längenänderung vollziehen, um den Elementträger in eine Endstellung, insbesondere eine Arbeitsstellung, zu überführen. Die Transferbewegung kann manuell oder automatisiert erfolgen. Somit kann eine Transfervorrichtung variabel und kundengerecht ausgebildet sein.

Eine Transfervorrichtung kann zusätzlich ausgebildet sein, um das wenigstens eine Funktionselement wieder aus der Prozesskammer zu führen. Eine derartige Transfervorrichtung ist besonders vorteilhaft für Arbeiten in Prozesskammern.

Durch eine erfindungsgemäße Transfervorrichtung kann eine Prozesskammer relativ platzsparend und kostengünstig ausgebildet sein, da das wenigstens eine Funktionselement nur teilweise, also nicht vollständig, in die Prozesskammer überführbar ist.

Weiterhin können Wartungs- und Reparaturarbeiten an der Transfervorrichtung einfacher ausgeführt werden, da ein Eingreifen in die Prozesskammer vermieden werden kann, was insbesondere von Vorteil in Isolatoren, Reinräumen und Containments ist.

Das wenigstens eine Funktionselement ist austauschbar mit einem Elementträger der Transfervorrichtung verbunden. Dadurch kann das Funktionselement schnell auf- bzw. abmontiert werden, um repariert, gewartet oder sterilisiert zu werden. Ein austauschbares Funktionselement ist somit insbesondere dann vorteilhaft, wenn eine Prozesskammer frei von Kontamination gehalten werden muss.

Ferner ist bei einem austauschbaren Funktionselement vorteilhaft, dass Prozessabläufe ohne langwierige Unterbrechungen auskommen können, denn selbst wenn das wenigstens eine Funktionselement nicht funktionsfähig ist, kann es durch ein weiteres Funktionselement einfach ersetzt werden.

Eine erfindungsgemäße Transfervorrichtung kann mehr als einen Elementträger haben, welche jeweils mit einem Funktionselement verbunden sein können. Hierdurch können vorteilhaft mehrere Funktionselemente in eine Prozesskammer überführt werden, wodurch Prozesse angepasst, erweitert bzw. effizienter ausgestaltet werden können, was Überführungen und Arbeiten in Prozesskammern noch weiter verbessern kann.

Bei einer vorteilhaften Ausgestaltung kann vorgesehen sein, dass das wenigstens eine Funktionselement ein Ausgabeelement einer Dosierstation ist. Somit kann vorteilhat ein Ausgabeelement einer Dosierstation zur Befüllung von Behältnissen wie beispielsweise Vials, Karpulen, Ampullen oder Spritzen in eine Prozesskammer eines Reinraums, Containments oder Isolators überführt werden.

Insbesondere kann das Ausgabeelement als Nadel ausgebildet sein. Somit können selbst kleine Behältnisse präzise befüllt werden.

Bei einer vorteilhaften Ausgestaltung kann vorgesehen sein, dass das wenigstens eine Funktionselement form- und/oder kraftschlüssig an den Elementträger angebracht ist. Somit kann ein Funktionselement beispielsweise an den Elementträger geschraubt, geklemmt oder gesteckt werden. Eine form- und/oder kraftschlüssige Anbringung an den Elementträger sorgt für eine robustere Verbindung des Funktionselements mit der Transfervorrichtung. Dadurch kann eine Überführung in die Prozesskammer verbessert werden, da weniger Kontaminationen durch Abrieb entstehen. Ferner kann eine robustere Verbindung für weniger Erschütterungen an der Transfervorrichtung und/oder dem wenigstens einen Funktionselement sorgen, wodurch sowohl die Transfervorrichtung als auch das Funktionselement langlebiger sein können.

Bei einer vorteilhaften Ausgestaltung kann vorgesehen sein, dass das wenigstens eine Funktionselement mit einer Zuleitung, insbesondere einer Mediumsleitung verbunden ist. Somit kann dem wenigstens einen Funktionselement vorteilhaft Flüssigkeit zugeführt werden.

Eine Mediumsleitung ist besonders vorteilhaft, wenn das Funktionselement als Ausgabeelement einer Dosierstation ausgebildet ist. Die Mediumsleitung kann so an das Ausgabeelement angebracht sein, dass die Mediumsleitung nicht in die Prozesskammer überführt werden muss. Vorteilhaft daran ist, dass eine Mediumsleitung relativ kurz gehalten werden kann, wodurch ungewollte Verknotungen und/oder Verwicklungen der Mediumsleitung insbesondere bei einer Überführung vermieden werden können.

Es kann auch eine pneumatische Zuleitung für die Zufuhr von Gasen, beispielsweise Stickstoff, mit dem Funktionselement verbunden sein. Somit können vorteilhaft durch die Transfervorrichtung Gase für bestimmte Prozesse zugeführt werden.

Ferner kann vorgesehen sein, dass ein Funktionselement, beispielsweise eine Nadel oder die zuvor erwähnte Nadel, so ausgebildet ist, dass vorteilhaft die Zufuhr von wenigstens einer Flüssigkeit und wenigstens einem Gas in die Prozesskammer realisierbar ist.

Bei einer vorteilhaften Ausgestaltung kann vorgesehen sein, dass das wenigstens eine Funktionselement in seinem Verlauf wenigstens einen Richtungswechsel aufweist. Somit kann zur optimalen Überführung in die Arbeitsposition das wenigstens eine Funktionselement an die Transfervorrichtung und/oder an die Ausgestaltung die Prozesskammer angepasst sein.

Ein Richtungswechsel kann dabei eine Biegung des Funktionselements, beispielsweise einer Nadel, sein. Insbesondere kann dabei vorgesehen sein, dass der Richtungswechsel Teil einer Leitung ist und/oder durch einen Fortsatz ausgebildet ist. Somit kann ein Funktionselement noch genauer an die Transfervorrichtung und/oder an die Ausgestaltung der Prozesskammer angepasst sein.

Unter einem Richtungswechsel einer Leitung ist ein Richtungswechsel des im Inneren des Funktionselements befindlichen Teils eines Leitungssystems zu verstehen. So kann beispielsweise eine Mediumsleitung im Inneren eines gebogenen Ausgabeelements selbst gebogen sein. Somit kann die Leitung vorteilhaft an die Form des Ausgabeelements angepasst und durch dieses geschützt werden.

Unter einem Richtungswechsel einer Leitung ist somit insbesondere kein Richtungswechsel der Zuleitung gemeint, welcher durch unkoordiniertes Verdrehen (z.B. während der Überführung des Funktionselements) der Zuleitung entsteht.

Ein Fortsatz kann nicht nur einen Richtungswechsel des Funktionselements bedingen, sondern auch dazu ausgebildet sein, das Funktionselement mit dem Elementträger zu verbinden. Ein Fortsatz selbst kann wenigstens einen Richtungswechsel aufweisen, wodurch der Fortsatz speziell an eine Transfervorrichtung und/oder an ein Funktionselement angepasst sein kann. Dies kann besonders von Vorteil bei der Verbindung zwischen Transfervorrichtung mit dem Funktionselement sein.

Bei einer vorteilhaften Ausgestaltung kann vorgesehen sein, dass das wenigstens eine Funktionselement in der Endstellung, insbesondere der Arbeitsstellung, durch eine Transferöffnung in die Prozesskammer ragt. Dabei kann der Umfang der Transferöffnung an den Umfang des Funktionselements angepasst sein, sodass noch weniger Kontaminationen in die Prozesskammer gelangen, wenn das wenigstens eine Funktionselement in die Prozesskammer überführt wird bzw. sich in der Endstellung, insbesondere der Arbeitsstellung, befindet.

Besonders ist dabei vorgesehen, dass die Transferöffnung an einer senkrechten und/oder waagerechten und/oder schrägen Trennwand der Prozesskammer angeordnet ist. Die Ausrichtung der Transferöffnung kann so gestaltet sein, dass eine Transfervorrichtung energieeffizient ein Funktionselement in die Prozesskammer überführen kann. So kann beispielsweise eine Transfervorrichtung, die oberhalb einer Transferöffnung in einer waagerecht oder schräg ausgerichteten Trennwand positioniert ist, das Funktionselement durch eine kurze Vertikalbewegung nach unten in eine Prozesskammer überführen.

Bei einer vorteilhaften Ausgestaltung kann vorgesehen sein, dass das wenigstens eine Funktionselement stufenweise in die Prozesskammer überführbar ist. Hierbei ist von Vorteil, dass das Funktionselement optimal in die Prozesskammer überführt werden kann. So ist es beispielsweise möglich, dass ein Funktionselement vorteilhaft von einer Ausgangsgangstellung über eine Assemblierungsstellung und/oder Wartestellung und/oder Dekontaminationsstellung in die Prozesskammer überführt wird. Somit kann ein optimaler Prozessablauf auch bereits außerhalb der Prozesskammer eingeleitet bzw. durchgeführt werden.

Bei einer vorteilhaften Ausgestaltung kann vorgesehen sein, dass das wenigstens eine Funktionselement an dem Elementträger vorzugsweise in die Prozesskammer schwenkbar ist. Unter schwenkbar kann beispielsweise eine rotierende Bewegung um einen festen oder sich bewegenden Drehpunkt verstanden werden. Eine Transfervorrichtung, die das wenigstens eine Funktionselement in die Prozesskammer schwenken kann, kann platzsparend eingerichtet sein, da die Transfervorrichtung sehr nahe oder direkt an einer Trennwand der Prozesskammer positioniert sein kann. Eine Schwenkmechanik kann auch energetisch sehr günstig ausgebildet sein.

Ferner kann eine Transfervorrichtung direkt mit einer Transferöffnung verbunden sein, wodurch vorteilhaft der Überführungsweg des Funktionselements von der Ausgangsstellung in die Endstellung, insbesondere die Arbeitsstellung, verkürzt werden kann.

Bei einer vorteilhaften Ausgestaltung kann vorgesehen sein, dass der Elementträger wenigstens ein Verbindungsstück aufweist, an dem das wenigstens eine Funktionselement gehalten ist. Durch das Verbindungsstück kann das Funktionselement beabstandet zu einer Basisplatte des Elementträgers geführt werden. Somit kann das Verbindungsstück an die Ausmaße eines Funktionselements angepasst sein, wodurch eine Transfervorrichtung vielfältig einsetzbar sein kann, was vorteilhaft für Anwender ist.

Insbesondere ist das wenigstens eine Funktionselement winklig zu dem wenigstens einen Verbindungsstück führbar. Durch die winklige Führung kann vorteilhaft das wenigstens eine Funktionselement in eine Vielzahl von Endstellungen, insbesondere Arbeitsstellungen oder Zwischenstellungen, positioniert werden.

Ferner kann ein Elementträger auch mehrerer Verbindungsstücke aufweisen, wodurch insbesondere große und/oder schwere Funktionselemente vorteilhaft geführt werden können.

Alternativ oder zusätzlich ist der Elementträger beabstandet zu einer, insbesondere der bereits erwähnten, Trennwand angelenkt. Vorteilhaft ist dabei, dass der Elementträger sehr nahe bzw. direkt an der Trennwand sein kann, wodurch ein besonders kurzer Überführungsweg des Funktionselements in die Prozesskammer hinein möglich ist.

Bei einer vorteilhaften Ausgestaltung kann vorgesehen sein, dass die Transferöffnung durch die Bewegung des Elementträgers in die Endstellung, insbesondere die Arbeitsstellung, abdichtbar ist. Somit kann vorteilhaft die Bewegung des Elementträgers zusätzlich zur Abdichtung der Transferöffnung verwendet werden, wodurch die Transferöffnung nur relativ kurz geöffnet ist und somit die Wahrscheinlichkeit einer Kontamination noch weiter verringert werden kann.

Insbesondere ist die Transferöffnung durch den Elementträger abdichtbar. Somit kann das Risiko einer Kontamination besonders stark verringert werden, was insbesondere von Vorteil in pharmazeutischen Umgebungen wie Isolatoren, Reinräumen oder Containments ist.

Bei einer vorteilhaften Ausgestaltung kann vorgesehen sein, dass der Elementträger Dichtelemente aufweist. Dichtelemente können an die Oberfläche einer, insbesondere der bereits erwähnten, Trennwand oder an die Ausformung einer Transferöffnung angepasst sein, wodurch eine Abdichtung noch effektiver gestaltet sein kann.

Alternativ oder zusätzlich können Dichtelemente an der Transferöffnung und/oder Transfervorrichtung angebracht sein. Somit kann eine Abdichtung besonders effektiv ausgestaltet sein.

Bei einer vorteilhaften Ausgestaltung kann vorgesehen sein, dass sich die Transferöffnung bei Nichtbenutzung durch die Transfervorrichtung und/ oder Verschlussdeckel verschließen lässt. Als Nichtbenutzung ist zu verstehen, dass ein Funktionselement weder überführt wird noch in der Prozesskammer positioniert ist. Dabei kann eine Transfervorrichtung, beispielsweise durch einen Verschlussdeckel, eine Transferöffnung abdichten. Dabei kann der Verschlussdeckel funktionell und/oder strukturell mit der Transfervorrichtung gekoppelt sein. Eine Transfervorrichtung kann somit variabel einsetzbar und kundenfreundlich ausgestaltet sein, da sie neben der Überführungsfunktion auch weitere Funktionen ausführen kann.

Bei einer vorteilhaften Ausgestaltung kann vorgesehen sein, dass wenigstens zwei Elementträger mit jeweils einem Funktionselement vorhanden sind, sodass die Funktionselemente unabhängig voneinander in die Prozesskammer überführbar sind. Somit ist jedes Funktionselement über einen separaten Elementträger mit der Transfervorrichtung verbunden. Von Vorteil bei einer solchen Transfervorrichtung ist die hohe Flexibilität und Produktivität, da sowohl baugleiche Funktionselemente als auch verschiedenartige Funktionselemente in die Prozesskammer überführt werden können. Somit kann eine kundenspezifische Anordnung von Funktionselementen realisiert werden, was Überführungen und Arbeiten in Prozesskammern verbessert. Auch kann eine Prozesssicherheit erhöht werden, da bereits überführte Anordnungen von Funktionselementen nicht mehr fehlmanipuliert werden können.

Ferner können die wenigstens zwei Funktionselemente nacheinander, also zeitlich versetzt, in die Prozesskammer überführt werden, wodurch die Überführung der wenigstens zwei Elementträger an einen jeweiligen Prozess angepasst sein können. Dies ist insbesondere dann vorteilhaft, wenn die wenigstens zwei Funktionselemente unterschiedliche Funktionen ausführen können.

Nacheinander kann auch bedeuten, dass ein Elementträger der wenigstens zwei Elementträger während eines Prozesszyklus überhaupt nicht in die Endstellung, insbesondere die Arbeitsstellung, überführt werden soll. Somit kann insbesondere bei Befüllvorrichtungen eine Transfervorrichtung flexibel und energiesparend Verwendung finden. Besonders in der pharmazeutischen Industrie ist es ferner von Vorteil, wenn so wenig Material wie möglich in eine Prozesskammer überführt wird, um Kontaminationen zu verhindern.

Insbesondere können die wenigstens zwei Elementträger nacheinander schwenkbar überführbar sein. Hierdurch können die wenigstens zwei Elementträger vorteilhaft in die Prozesskammer geschwenkt werden.

Bei einer vorteilhaften Ausgestaltung kann vorgesehen sein, dass mehr als zwei Elementträger, vorzugsweise acht oder vier Elementträger, in einem vorzugsweise regelmäßigen Abstand zueinander angeordnet sind. Eine derartige Transfervorrichtung kann besonders vorteilhaft für Befüllprozesse sein, bei denen mehrere, vorzugsweise vier oder acht, Ausgabeelemente einer Dosierstation in eine Prozesskammer überführt werden. Hierdurch können Befüllprozesse besonders flexibel gestaltet werden, da Anzahl und Abstand der Ausgabeelemente an die Art und Ausrichtung der zu füllenden Behältnisse angepasst werden kann. Ebenfalls von Vorteil ist, dass der Ausfall eines oder mehrerer Funktionselemente einen Prozess nicht unterbrechen muss, insbesondere nicht, da die Funktionselemente austauschbar an einen Elementträger angeordnet sind und somit schnell ausgetauscht werden können.

Bei einer vorteilhaften Ausgestaltung kann vorgesehen sein, dass die wenigstens zwei Funktionselemente vorzugsweise unabhängig voneinander durch separate Transferöffnungen in die Prozesskammer überführbar sind. Unabhängige Transferöffnungen können passgenau an die Maße eines Funktionselements angepasst sein, sodass die Gesamtfläche aller Transferöffnungen klein ausgebildet sein kann. Vorteilhaft bei einer solchen Ausgestaltung kann sein, dass Kontaminationen wie Abrieb oder Mikroben wenig bis gar nicht in die Prozesskammer gelangen. Auch kann bei unterschiedlichen Druckverhältnissen innerhalb und außerhalb der Prozesskammer, ein geringerer Luftaustausch erreichbar sein.

Bei einer vorteilhaften Ausgestaltung kann vorgesehen sein, dass das wenigstens eine Funktionselement, vorzugsweise ein freier Abschnitt des wenigstens einen Funktionselements, in der Endstellung, insbesondere der Arbeitsstellung, in schräger Ausrichtung und/ oder parallel zu der Trennwand ausgerichtet ist. Hierdurch kann das wenigstens eine Funktionselement exakt in der Prozesskammer positioniert sein, sodass Prozessabläufe hinderungsfrei ablaufen können.

Alternativ oder zusätzlich können die Funktionselemente eine längs der Trennwand verlaufende Anordnung bilden. Dabei kann die Anordnung so ausgebildet sein, dass die Abstände zwischen den Funktionselementen für eine optimale Prozessdurchführung an die Abstände der zu prozedierenden Gegenstände angepasst sind. Beispielsweise können mehrere Nadeln zur Befüllung regelmäßig voneinander beabstandet sein, sodass regelmäßig beabstandete Behältnisse gleichzeitig befüllt werden können.

Bei einer vorteilhaften Ausgestaltung kann vorgesehen sein, dass die Prozesskammer als Teil eines Isolators ausgebildet ist. Hierbei kann vorgesehen sein, dass die Transfervorrichtung an der Trennwand zwischen Prozesskammer und einer Ausgangskammer oder Schleuse ausgebildet ist. Ausgangskammer und/oder Schleuse können selbst als Isolator ausgebildet sein. Hierdurch kann eine Transfervorrichtung insbesondere in Isolatoren, Reinräumen oder Containments der pharmazeutischen Industrie oder in anderen Industriezweigen mit aseptischen Umgebungen verwendet werden. Alternativ oder zusätzlich kann hierbei vorgesehen sein, dass die Transfervorrichtung an einem Boden der Prozesskammer und/oder an einem Boden einer, beispielsweise der bereits erwähnten, Ausgangskammer oder in einer, beispielsweise der bereits erwähnten, Umgebung der Prozesskammer ausgebildet ist. Somit kann die Transfervorrichtung außerhalb der Prozesskammer aufgestellt sein. Eine Verschmutzung der Prozesskammer, beispielsweise durch Abrieb eines motorischen oder manuellen, elektrischen, elektromagnetischen, fluidischen oder mechanischen Antriebs der Transfervorrichtung, ist reduzierbar.

Bei einer vorteilhaften Ausgestaltung kann vorgesehen sein, dass eine Überführung automatisiert ist. Somit können Überführungen von Funktionselementen automatisiert durchgeführt werden, wodurch Prozesse vorteilhaft beschleunigt werden können. Eine derartige automatisierte Überführung durch eine Transfervorrichtung erlaubt es, dass pharmazeutische Prozesse vollautomatisiert ablaufen können.

Bei einer vorteilhaften Ausgestaltung kann vorgesehen sein, dass das Funktionselement während der Übergabe von der Transfervorrichtung und einer Transportvorrichtung gleichzeitig greifbar ist. Während der Übergabe an der Transferöffnung kann das Funktionselement vorteilhaft gleichzeitig von der Transfervorrichtung und einer Transportvorrichtung gehalten werden, wobei von den beiden genannten Vorrichtungen eine in der Ausgangskammer und die zweite in der Prozesskammer positioniert ist. Somit kann ein Übertrag von Kontamination während der Übergabe noch weiter verringert werden. Ferner können die Transfervorrichtung und die Transportvorrichtung so angeordnet und funktionell aufeinander abgestimmt sein, dass die Überführung des Funktionselements in die Prozesskammer durch das gleichzeitige Greifen ohne Verzögerungen bzw. Störungen abläuft. Somit kann das Arbeiten in Prozesskammern weiter verbessert werden.

Die Transfervorrichtung und die Transportvorrichtung können baugleiche Überführungsvorrichtungen sein, wodurch vorteilhaft Wartungen und Reparaturen durch den gleichen Techniker durchgeführt werden können, was zeit- und kostensparend sein kann. Baugleiche Überführungsvorrichtungen können zudem besser aufeinander abgestimmt werden, was vorteilhaft ist.

Die Transfervorrichtung und die Transportvorrichtung können platzsparend angeordnet sein, sodass minimal wenig Raum in der Ausgangskammer und/oder in der Prozesskammer benötigt wird. Vorzugsweise sind die Transfervorrichtung und die Transportvorrichtung physisch nicht miteinander verbunden, sodass beispielsweise bei Wartungsarbeiten nur die zu wartende Überführungsvorrichtung behandelt werden muss, ohne dass die andere Überführungsvorrichtung davon beeinflusst wird. Somit kann eine größere Flexibilität eines Überführungsprozesses erreichbar sein. Auch kann eine Prozesslinie durch die gegebene Modularität aus Transfervorrichtung und Transportvorrichtung weniger störanfällig sein.

Bei einer vorteilhaften Ausgestaltung kann vorgesehen sein, dass das Funktionselement während der Übergabe in der Transferöffnung angeordnet ist. Somit können vorteilhaft Teile des Funktionselements während der Übergabe in der Ausgangskammer und in der Prozesskammer angeordnet sein. Vorteilhaft daran ist, dass während der Übergabe die Transferöffnung, insbesondere dann, wenn die Transferöffnung, wie zuvor beschrieben an die Ausmaße des Funktionselements angepasst ist, durch das Funktionselement insoweit abgedichtet sein kann, dass ein Übertrag von Kontaminationen in die Prozesskammer verringert wird. So kann ferner verhindert werden, dass Teile der Transfervorrichtung und/oder Transportvorrichtung durch die Transferöffnung ragen.

Bei einer vorteilhaften Ausgestaltung kann vorgesehen sein, dass die Prozesskammer zu einer Aufnahme, insbesondere über eine Schleuse, und/oder einer Bearbeitung, insbesondere mit einer Dosierstation, wenigstens eines Behältnisses ausgebildet ist. Somit ist das wenigstens eine Behältnis während einer Bearbeitung, insbesondere Befüllung, von äußeren Umgebungseinflüssen schützbar und/oder die Bearbeitung ist mit einer reduzierten Beeinflussung einer Umgebung, beispielsweise durch gefährliche Substanzen, ausführbar.

Alternativ oder zusätzlich kann vorgesehen sein, dass die Prozesskammer zu einer Bearbeitung, insbesondere mit einer Dosierstation, wenigstens eines Behältnisses ausgebildet ist. Von Vorteil ist dabei, dass die Bearbeitung mit einem reduzierten Verschmutzungsrisiko an dem Behältnis ausführbar ist.

Bei einer vorteilhaften Ausgestaltung kann vorgesehen sein, dass die Prozesskammer mit einem höheren Druck beaufschlagt ist und / oder ein Luftstrom aus der Prozesskammer in eine, beispielsweise die bereits erwähnte, Ausgangskammer oder eine Umgebung strömt und / oder eine höhere Reinheitsstufe erfüllt als ihre Umgebung und/oder eine benachbarte Ausgangskammer. Die Erfindung ist hier mit besonderem Nutzen anwendbar, da auf einfache Weise erreicht werden kann, dass durch die Funktionselemente eine möglichst geringe Verschmutzung in die Prozesskammer eingetragen wird. Die Erfindung ist daher auch mit Vorteil bei Systemen mit Druckkaskaden anwendbar.

Beispielsweise kann die Prozesskammer als eine geschützte Umgebung, insbesondere ein Isolator und / oder ein RABS (restricted-access barrier system, Anordnung mit zugangsbeschränkender oder zugangsbeschränkter Sperre), ausgebildet sein. Beispielsweise kann die Prozesskammer ein offenes oder ein geschlossenes RABS sein.

Alternativ oder zusätzlich sind zur Lösung der genannten Aufgabe erfindungsgemäß die Merkmale des nebengeordneten, auf ein Verfahren zur Übergabe wenigstens eines Funktionselements an einer Transferöffnung zur Überführung in eine Prozesskammer gerichteten Anspruchs vorgesehen. Insbesondere wird somit zur Lösung der genannten Aufgabe bei einem Verfahren der eingangs beschriebenen Art erfindungsgemäß vorgeschlagen, dass während der Übergabe die Transfervorrichtung und die Transportvorrichtung durch die Transferöffnung getrennt sind. Durch dieses Verfahren kann ein Überführen eines Funktionselements in eine Prozesskammer kontaminationsreduzierend durchgeführt werden, da die Transfervorrichtung sowie die Transportvorrichtung während der Übergabe in ihren jeweiligen Kammern verbleiben. Die Übergabe kann umso kontaminationsarmer stattfinden, wenn die Transferöffnung, wie zuvor beschrieben, an den Umfang des Funktionselements angepasst ist. Somit kann durch ein erfinderisches Verfahren das Arbeiten in einer Prozesskammer verbessert werden, insbesondere bei Arbeiten in einem Isolator und ganz besonders bei der Befüllung pharmazeutischer Produkte.

Ferner können Übergabewege relativ kurz gehalten werden, sofern die Transfervorrichtung und/oder die Transportvorrichtung an der Trennwand positioniert sind. Somit kann ein erfindungsgemäßes Verfahren schnell und energieeffizient ausgeführt werden.

Bei einer vorteilhaften Ausführung des Verfahrens kann vorgesehen sein, dass das Funktionselement während der Übergabe in der Transferöffnung positioniert ist. Somit wird während der Übergabe die Transferöffnung durch das Funktionselement eingenommen. Hierdurch kann ein Kontaminationseintrag in die Prozesskammer noch weiter verringert werden, insbesondere bei Transferöffnungen, die wie zuvor beschrieben, an den Umfang des Funktionselements angepasst sind.

Bei einer vorteilhaften Ausführung des Verfahrens kann vorgesehen sein, dass das Funktionselement während der Übergabe teilweise in eine Ausgangskammer und teilweise in die Prozesskammer ragt. Vorteilhaft daran ist, dass das Funktionselement nachjustiert oder modifiziert werden kann, ohne dass dabei Kontaminationen durch die Transferöffnungen treten. So kann beispielsweise ein Ausgabeelement, dass während der Übergabe noch teilweise in die Ausgangskammer ragt, in der Ausgangskammer mit einer Mediumsleitung verbunden werden.

Bei einer vorteilhaften Ausführung des Verfahrens kann vorgesehen sein, dass während der Übergabe der Elementträger der Transfervorrichtung das Funktionselement an einem anderen Griffpunkt greift als der Elementträger der Transportvorrichtung. Dabei kann der Elementträger der Transfervorrichtung vorzugsweise oberhalb und/oder unterhalb des Elementträgers der Transportvorrichtung greifen, was vorteilhaft für das gleichzeitige Greifen an das Funktionselement während der Übergabe ist.

Alternativ oder zusätzlich sind zur Lösung der genannten Aufgabe erfindungsgemäß die Merkmale des nebengeordneten, auf eine Verwendung gerichteten Anspruchs vorgesehen. Insbesondere wird somit zur Lösung der genannten Aufgabe bei einer Verwendung der eingangs beschriebenen Art erfindungsgemäß vorgeschlagen, dass bei einer Transfervorrichtung und/oder bei einem Verfahren, wie zuvor beschrieben oder nachfolgend beansprucht, nach einer zumindest teilweisen Überführung des wenigstens einen Funktionselements in die Prozesskammer das wenigstens eine Funktionselement vorzugsweise in der Ausgangskammer mit einer Zuleitung verbindbar ist bzw. verbunden wird. Somit kann eine Assemblierung oder eine Deinstallation des wenigstens einen Funktionselements mit einer Zuleitung außerhalb der Prozesskammer stattfinden, wodurch die Prozesskammer von Kontaminationen (Abrieb, austretende Flüssigkeit) freigehalten werden kann. Dies ist insbesondere vorteilhaft in Isolatoren, Containments und Reinräumen.

Die Erfindung wird nun anhand von Ausführungsbeispielen näher beschrieben, ist jedoch nicht auf diese Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen der Ausführungsbeispiele.

Es zeigt:
- Figur 1: eine Seitenansicht einer erfindungsgemäßen Transfervorrichtung in einem Isolator,
- Figur 2: eine Seitenansicht einer erfindungsgemäßen Transfervorrichtung mit schwenkbaren Elementträger,
- Figur 3: eine Seitenansicht einer erfindungsgemäßen Transfervorrichtung, wobei das Funktionselement durch eine horizontale Trennwand überführbar ist,
- Figur 4: eine Seitenansicht einer erfindungsgemäßen Transfervorrichtung, wobei das Funktionselement durch eine schräge Trennwand überführbar ist,
- Figur 5: eine Seitenansicht einer erfindungsgemäßen Transfervorrichtung, wobei das Funktionselement durch eine schräge Trennwand überführbar ist,
- Figur 6: eine Seitenansicht einer alternativen Ausführungsform einer Transfervorrichtung mit schwenkbaren Elementträger,
- Figur 7: eine Seitenansicht einer erfindungsgemäßen Transfervorrichtung mit einem Verbindungsstück,
- Figur 8: eine Seitenansicht einer erfindungsgemäßen Transfervorrichtung, wobei ein Elementträger eine Transferöffnung abdichtet und ein Funktionselement in der Endstellung, insbesondere der Arbeitsstellung, ist,
- Figur 9: eine Seitenansicht einer erfindungsgemäßen Transfervorrichtung, wobei ein Verschlussdeckel eine Transferöffnung abdichtet,
- Figur 10: eine isometrische Schnittansicht einer erfindungsgemäßen Transfervorrichtung mit zwei Elementträgern,
- Figur 11: eine isometrische Schnittansicht einer erfindungsgemäßen Transfervorrichtung mit vier Elementträgern,
- Figur 12: eine Trennwand eines Isolators mit acht Nadeln in Endstellung, insbesondere Arbeitsstellung,
- Figur 13: eine Transfervorrichtung in einem Isolator mit Schleuse,
- Figur 14: eine alternative Transfervorrichtung in einem Isolator mit Schleuse,
- Figur 15: eine Seitenansicht eines Funktionselements in einer ersten Stellung,
- Figur 16: eine Seitenansicht eines Funktionselements in der Ausgangsstellung,
- Figur 17: eine Seitenansicht eines Funktionselements an der Transferöffnung,
- Figur 18: eine Seitenansicht eines Funktionselements in der Arbeitsstellung.

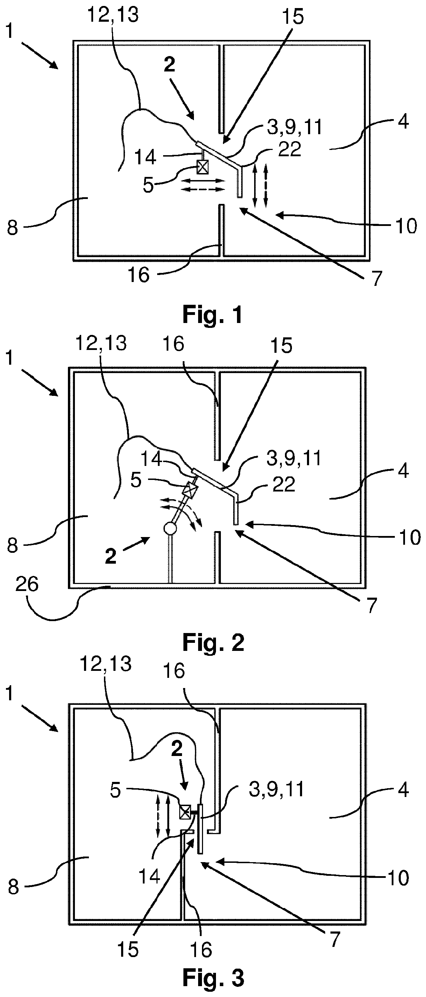

Figur 1 zeigt einen in der pharmazeutischen Industrie bekannten Isolator 1, welcher eine erfindungsgemäße Transfervorrichtung 2 aufweist. Die Transfervorrichtung 2 befindet sich in einer Ausgangskammer 8, die durch eine Trennwand 16 von einer Prozesskammer 4 separiert ist.

Das in Figur 1 abgebildete Funktionselement 3 ist ein als Nadel 11 ausgebildetes Ausgabeelement 9. Die Nadel 11 befindet sich innerhalb der Prozesskammer 4 in Arbeitsstellung 7 als einer Endstellung der Transferbewegung funktionsnah zu einer nicht näher gezeigten Dosierstation 10, an der beispielsweise Vials, Karpulen oder Ampullen befüllt werden können. Ein derartiges Funktionselement 3, 9, 11 ist ebenso in den nachfolgenden Figuren offenbart. Es kann jedoch jedes erdenkliche Funktionselement 3 durch eine Transfervorrichtung 2 in eine Prozesskammer 4 überführt werden, wodurch unterschiedliche Prozesse ausführbar sind.

Weiterhin ist in Figur 1 zu erkennen, dass die Nadel 11 in der Arbeitsstellung 7 teilweise in der Prozesskammer 4 und teilweise außerhalb der Prozesskammer 4 angeordnet ist. Diese Anordnung der Nadel 11 ist unter anderem in den alternativen Ausführungsformen in den Figuren 2 bis 6 dargestellt.

Es kann ferner vorgesehen sein, dass das wenigstens eine Funktionselement 3 in seinem Verlauf wenigstens einen Richtungswechsel aufweist. So sind die in den Figuren 1, 2, 6, 8 und 12 bis 14 dargestellten Nadeln 11 gebogen, ebenso wie die in den Nadeln 11 befindlichen Mediumsleitungen 13. Ein Richtungswechsel kann auch durch einen Fortsatz 14 des Funktionselements 3 realisiert sein. Der Fortsatz 14 kann, wie beispielsweise in Figur 1 dargestellt, zur Befestigung des Funktionselements 3, 9, 11 an den Elementträger 5 verwendet werden. Generell kann ein Richtungswechsel vorteilhaft sein, wenn ein Funktionselement 3 an die Ausrichtung einer Transferöffnung 15 oder an eine Prozesskammer 4 angepasst werden muss. Beispielsweise kann eine gebogene Nadel 11 in vertikaler Ausdehnung weniger Platz einnehmen als eine längliche Nadel 11, wodurch eine Ausgangskammer 8 in vertikaler Ausrichtung niedriger ausgebildet sein kann.

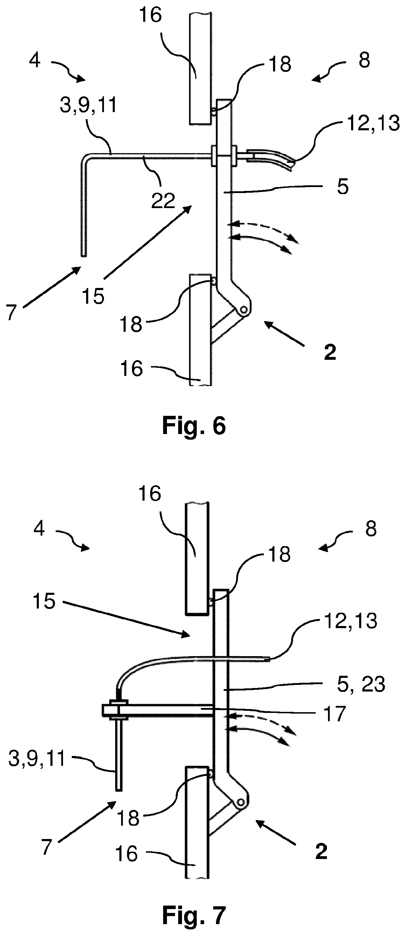

Zur Überführung in die Prozesskammer 4 ist das wenigstens eine Funktionselement 3 austauschbar an einem Elementträger 5 der Transfervorrichtung 2 angeordnet. In sämtlichen Figuren, die einen Elementträger 5 offenbaren, ist der Elementträger 5 form- und/oder kraftschlüssig mit dem Funktionselement 3, 9, 11 verbunden. So kann das Funktionselement 3, 9, 11 in den Elementträger 5 geschraubt, geklemmt oder wie in den Figuren 6 und 7 gezeigt, gesteckt sein. Figur 7 zeigt ein Funktionselement 3, 9, 11, dass sogar in ein Verbindungsstück 17 des Elementträgers 5 gesteckt ist, wodurch das Funktionselement 3, 9, 11 winklig zu dem Verbindungsstück 17 und beabstandet zu der Basisplatte 23 des Elementträgers 5 führbar ist. Ein Verbindungsstück 17 kann an die Ausmaße eines oder mehrerer Funktionselemente 3 angepasst sein. So kann beispielsweise ein Verbindungsstück 17 in Abhängigkeit der Ausmaße eines Funktionselements 3 mehr oder weniger lang ausgebildet sein. Generell kann ein Verbindungsstück 17 an ein Funktionselement 3 hinsichtlich seiner Form und/oder Ausmaße angepasst sein. Somit kann eine Transfervorrichtung 2 verschiedene Funktionselemente 3 überführen und an unterschiedlichen Orten einsetzbar sein, was vorteilhaft für Anwender ist.

Weiterhin kann der Elementträger 5 fest oder austauschbar an der Transfervorrichtung 2 verbunden sein. Austauschbare Elementträger 5 sind insofern vorteilhaft, da hierdurch eine Transfervorrichtung 2 unterschiedliche, an einen jeweiligen Elementträger 5 angepasste, Funktionselemente 3 überführen kann.

Die in Figur 1 und den weiteren Figuren offenbarte fluidische Zuleitung 12 ist eine Mediumsleitung 13. Generell kann eine fluidische Zuleitung 12 dazu ausgelegt sein, entweder das Funktionselement 3 zum Eigenantrieb zu speisen (mit beispielsweise Öl und/oder Kühlflüssigkeit) und/ oder um beispielsweise Behältnisse 20 wie Vials, Karpulen, Ampullen oder Spritzen durch ein Funktionselement 3, 9, 11 zu befüllen (Mediumsleitung 13).

Die Zuleitung 12 kann ebenfalls als pneumatische Zuleitung 12 zum Transport von Gasen ausgebildet sein.

Die in Figur 1 dargestellte Mediumsleitung 13 ist mit dem Funktionselement 3,9,11 innerhalb der Ausgangskammer 8 des Isolators 1 verbunden ist. In der hier gezeigten Ausführungsform kann die Assemblierung von der Zuleitung 12 und dem Funktionselement 3, 9, 11 entweder außerhalb des Isolators 1 oder in der Ausgangskammer 8 des Isolators 1 stattfinden. Somit kann eine Kontamination der Prozesskammer 4 im Zuge der Assemblierung oder Deinstallation (Abrieb, austretente Flüssigkeit) vorteilhaft vermieden werden.

Durch die Transfervorrichtung 2 kann das wenigstens eine Funktionselement 3, 9, 11 stufenlos (durchgehender Pfeil in sämtlichen Figuren) oder stufenweise (gestrichelte Pfeil in sämtlichen Figuren) in die Prozesskammer 4 überführt werden. Dabei kann eine Überführung bzw. eine Bewegung des Funktionselements 3, 9, 11 durch eine Transfervorrichtung 2 insbesondere horizontal (Figuren 1, 8, 13, 14 bis 18), vertikal (Figuren 1, 3, 4, 10, 11) oder um einen Drehpunkt rotierend, also schwenkbar (Figuren 2, 5, 6, 7), sein.

Es ist möglich, dass die in den Figuren dargestellten Transfervorrichtungen 2 die Funktionselemente 3, 9, 11 manuell oder automatisiert überführen.

Eine Transfervorrichtung 2 muss jedoch nicht, wie im zuvor beschrieben Paragraphen, auf eine Bewegungsrichtung eingeschränkt sein. Vielmehr kann eine Transfervorrichtung 2 wenigstens zwei Bewegungsrichtungen durchführen, wie es beispielsweise in Figur 1 dargestellt ist.

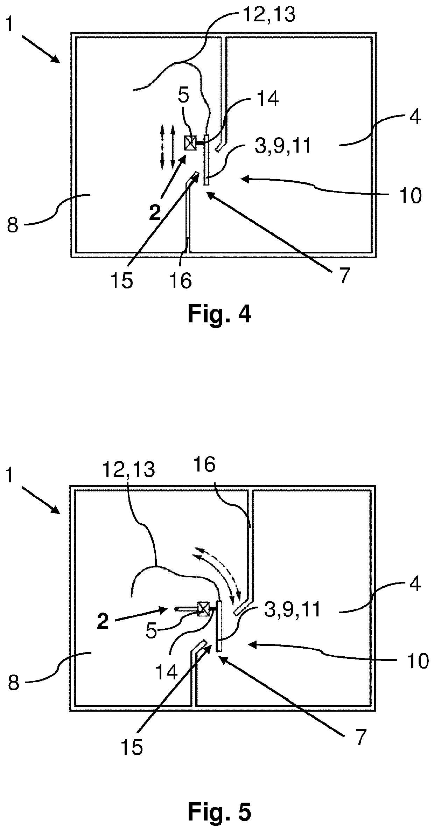

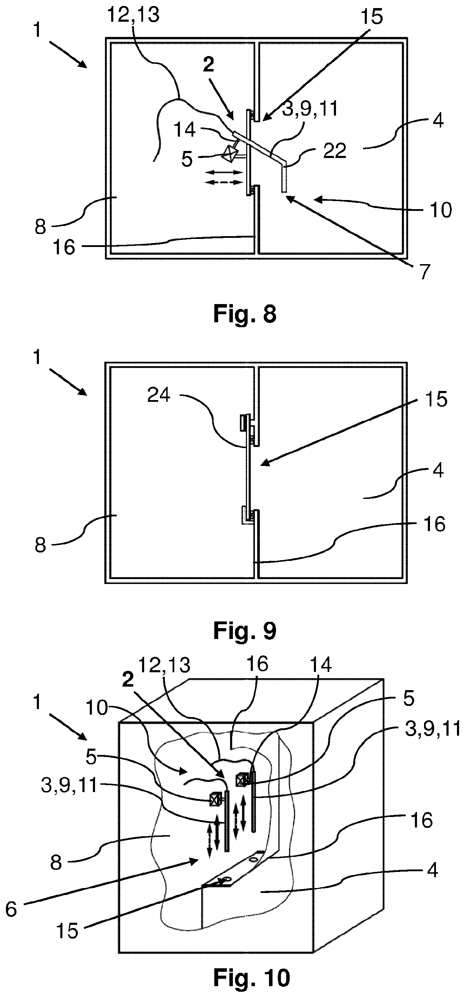

Ein Transferöffnung 15, durch die das wenigstens eine Funktionselement 3 überführt wird, kann vorzugsweise senkrecht (Figuren 1, 2, 6, 7, 8, 9, 12 bis 18) oder waagerecht (Figuren 3, 10, 11) oder schräg (Figuren 4 und 5), in oder an einer Trennwand 16 der Prozesskammer 4 angeordnet sein. Ein Transferöffnung 15 kann auch an einer gebogenen Trennwand 16 angeordnet sein (nicht gezeigt). Transferöffnungen 15 können relativ klein und passgenau an den Außenumfang des wenigstens einen Funktionselements 3 angepasst sein, so wie es in den Ausführungsformen der Figuren 10 bis 12 dargestellt ist.

In den Figuren 6 bis 8 ist dargestellt, dass die Transferöffnung 15 durch die Bewegung des Elementträgers 5 in die Arbeitsstellung 7 als eine Endstellung der Transferbewegung abdichtbar ist, wodurch die Prozesskammer 4 des Isolators 1 besonders vor Kontaminationen geschützt ist. Eine Abdichtung und damit einhergehende Schutzwirkung ist noch effektiver, wenn der Elementträger 5 Dichtelemente 18 aufweist (Figuren 6 und 7).

Bei Nichtbenutzung der Transfervorrichtung 2 kann die Transferöffnung 15 durch einen Verschlussdeckel 24 abgedichtet sein, wie es die Ausführungsform gemäß Figur 9 darstellt. Darin ist die Transferöffnung 15 durch den Verschlussdeckel 24 zwischen Ausgangskammer 8 und Prozesskammer 4 so verschlossen, dass vorteilhaft keinerlei Austausch zwischen den beiden Kammern 4, 8 stattfinden kann. Der Verschlussdeckel 24 kann funktionell und/oder strukturell mit der Transfervorrichtung 2 gekoppelt sein.

Ein Elementträger 5 kann verschiedenartig ausgebildet sein, sodass eine optimale austauschbare Verbindung mit dem oder einem Funktionselement 3 stattfinden kann. Ferner kann ein Elementträger 5 wenigstens einen Richtungswechsel aufweisen, wie es beispielsweise in Figuren 7 und 8 dargestellt ist. In den Ausführungsformen der Figuren 7 und 8 sorgt der Richtungswechsel des Elementträgers 5 für eine Beabstandung des an der Trennwand 16 und unterhalb der Transferöffnung 15 positionierten Elementträgers 5, wodurch eine schwenkbare Überführung der Funktionselemente 3, 9, 11 zumindest optimiert ist.

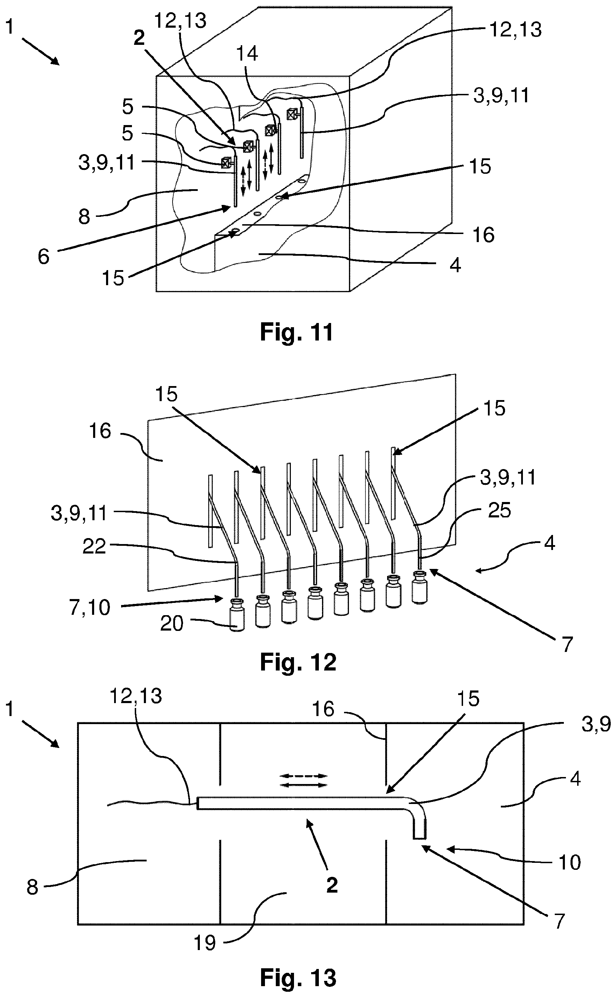

In den Figuren 10 bis 12 sind respektive zwei, vier und acht Funktionselemente 3,9, 11 offenbart, welche jeweils mit einem Elementträger 5 verbunden sind. Die Funktionselemente 3, 9, 11 der Figuren 10 und 11 befinden sich innerhalb der Ausgangskammer 8 in der Ausgangsstellung 6, wohingegen die Funktionselemente 3, 9, 11 der in Figur 12 gezeigten Ausführungsform in der Arbeitsstellung 7 sind.

Die in Figur 12 gezeigte Ausführungsform zeigt ferner, dass freie Abschnitte 25 der Funktionselemente 3, 9, 11 parallel zu der Trennwand 16 eines Isolators 1 ausgerichtet sind und längs der Trennwand 16 eine regelmäßige Anordnung bilden. Dabei ist die regelmäßige Anordnung an die regelmäßige Anordnung der Behältnisse 20 an der Dosierstation 10 angepasst, sodass die Behältnisse 20 durch die Funktionselemente 3, 9, 11 in der Arbeitsstellung 7 befüllt werden können.

Ferner ist in Figur 12 angedeutet, dass die Funktionselemente 3, 9, 11 in ihrem Verlauf einen Richtungswechsel aufweisen, wobei auch die in den Nadeln 11 befindlichen Leitungen 22 einen Richtungswechsel aufweisen.

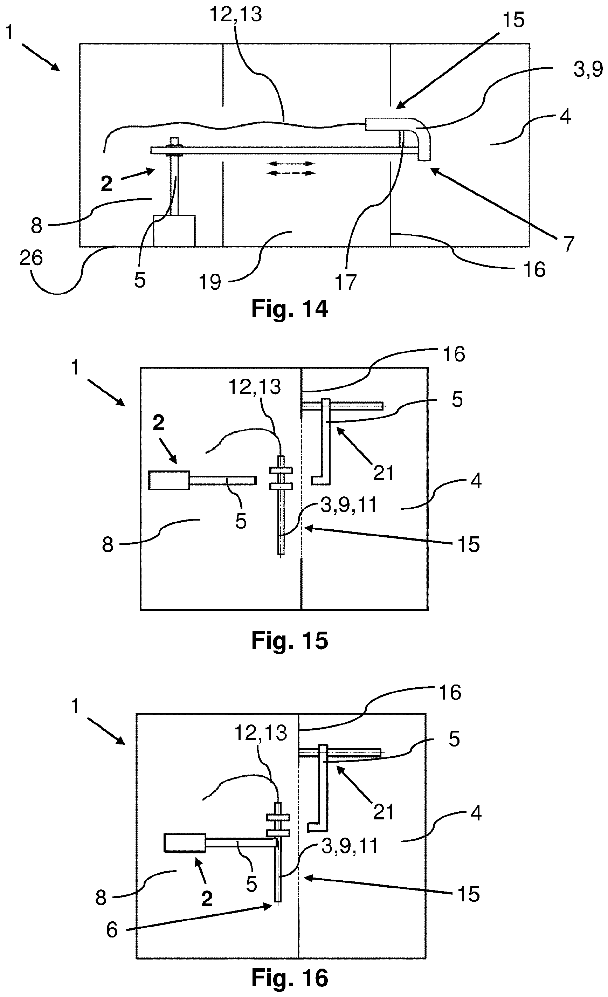

Die Ausführungsformen der Figuren 13 und 14 zeigen Isolatoren 1, in denen das wenigstens eine Funktionselement 3, 9 durch eine Transfervorrichtung 2 von einer Ausgangskammer 8 über eine Schleuse 19 bis in eine Prozesskammer 4 überführt werden kann. Auch bei diesen Ausführungsformen ist das wenigstens eine Funktionselement 3, 9 in der Arbeitsstellung 7 teilweise in der Prozesskammer 4 und teilweise außerhalb der Prozesskammer 4 angeordnet. Eine Schleuse 19 ist insbesondere vorteilhaft, wenn das wenigstens eine Funktionselement 3 zusätzlich sterilisiert werden soll.

Eine Transfervorrichtung 2 kann außerhalb (z.B. Figuren 1 bis 18) oder innerhalb (nicht gezeigt) der Prozesskammer 4 angeordnet sein. Figur 14 deutet eine längenveränderliche Transfervorrichtung 2 an, welche das Funktionselement 3,9 von der Ausgangskammer 8 über eine Schleuse 19 bis zu der Prozesskammer 4 überführen kann.

Die in den Figuren 15 bis 18 gezeigte Transfervorrichtung 2 ist innerhalb der Ausgangskammer 8 eines Isolators 1 angeordnet. Ein erfindungsgemäßes Verfahren zum Überführen wenigstens eines Funktionselements 3, 9, 11 in eine Prozesskammer 4 mit einer derartigen Transfervorrichtung 2 könnte wie folgt ablaufen.

Das Funktionselement 3, 9, 11 wird innerhalb der Ausgangskammer 8 mit einer fluidischen Zuleitung 12, 13 zusammengebaut (Figur 15). Es ist jedoch auch möglich, dass die Assemblierung fertig in die Ausgangskammer 8 gelangt oder nach der Überführung in die Prozesskammer 4 fertig gestellt wird.

Anschließend wird das Funktionselement 3, 9, 11 durch eine Transfervorrichtung 2 zu einer Ausgangsstellung 6 gebracht, welche sich innerhalb der Ausgangskammer 8 befindet (Figur 16).

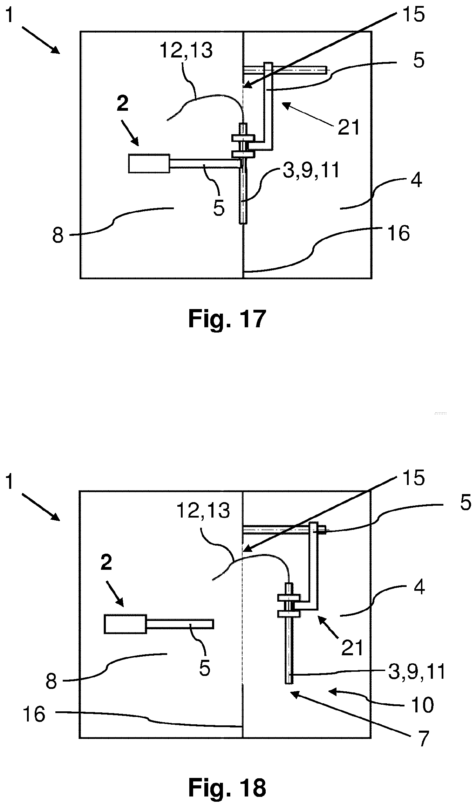

Daraufhin wird das Funktionselement 3, 9, 11 in eine Endstellung verbracht und dort an den Elementträger 5 der Transportvorrichtung 21 übergeben (Figur 17), und die Transportvorrichtung 21 überführt das Funktionselement 3, 9, 11 über die Transferöffnung 15 in die Prozesskammer 4 hinein zu einer Arbeitsstellung 7 (Figur 18).

Während der Übergabe (Figur 17) greifen die beiden Elementträger 5 der Transfervorrichtung 2 und Transportvorrichtung 21 gleichzeitig an dem Funktionselement 3,9,11, wodurch das Funktionselement 3,9,11 in die Prozesskammer 4 überführt wird, ohne dass einer der Elementträger 5 durch die Transferöffnung 15 greifen muss. Dadurch wird ein Kontaminationsübertrag in die Prozesskammer 4 hinein vermindert.

Während der Übergabe (Figur 17) ist das Funktionselement 3,9,11 in der Transferöffnung 15 angeordnet und ragt teilweise in die Ausgangskammer 8 und die Prozesskammer 4 hinein. Da die Transferöffnung 15 bei dem hier gezeigten Verfahren an die Ausmaße des Funktionselements 3,9, 11 sowie an die daran angeschlossene Zuleitung 12, 13 angepasst ist, können Kontaminationen der Prozesskammer 4 auf ein Minimum reduziert oder gar verhindert werden.

Nach der Übergabe wird das Funktionselement 3, 9, 11 durch die Transportvorrichtung 21 bis zu der Arbeitsstellung 7 bewegt (Figur 18).

Das beschriebene Verfahren ist beispielhaft an einem Funktionselement 3, 9, 11 dargestellt, kann aber ebenso mit mehreren, insbesondere mit vier oder acht Funktionselementen 3 ausgeführt werden.

Das beschriebene Verfahren wird vorzugsweise mit einer wie zuvor beschriebenen oder nachfolgend beanspruchten Transportvorrichtung 2 ausgeführt. Es ist ferner möglich, dass die Transfervorrichtung 21 nach einer wie zuvor beschriebenen oder nachfolgend beanspruchten Transportvorrichtung 2 ausgebildet ist.

In den Figuren 2 und 14 ist beispielhaft dargestellt, dass die Transfervorrichtung 2 an einem Boden 26 der Umgebung der Prozesskammer 4, beispielsweise in der Ausgangskammer 8, ausgebildet und abgestützt ist. Bei den übrigen Ausführungsbeispielen ist dies in ähnlicher Weise realisiert, ohne weiter dargestellt zu ein. Die Transfervorrichtung 2 kann auch an einem Boden der Prozesskammer ausgebildet sein.

Figur 12 zeigt ein Bearbeiten von Behältnissen 20 durch Befüllen. Die Behältnisse 20 wurden hierzu in die Prozesskammer 4 von außen, beispielsweise durch eine Schleuse 19, (vgl. Fig. 13), eingeführt und in der Prozesskammer 4 bereitgehalten.

Im Vergleich zu der Ausgangskammer 8 weist die Prozesskammer 4, die eine Vielzahl von zu befüllenden Behältnissen 20 aufnehmen kann, einen höheren Druck auf. Es kann somit ein Luftstrom aus der Prozesskammer 4 in die Ausgangskammer 8 strömen.

Hierbei oder bei einem weiteren Ausführungsbeispiel kann die Prozesskammer 4 einen höheren Reinheitsgrad oder eine höhere Reinheitsstufe (beispielsweise eine höherwertige Reinraumklasse nach GMP-Leitfaden Annex 1 oder vergleichbaren Festlegungen) aufweisen.

Die Erfindung schlägt allgemein eine Transfervorrichtung 2 und ein Verfahren zum Überführen wenigstens eines Funktionselements 3 in eine Prozesskammer 4 vor, wobei das wenigstens eine Funktionselement 3 austauschbar an einem Elementträger 5 angeordnet ist und der Elementträger 5 aus einer Ausgangsstellung 6 in eine Endstellung, beispielsweise eine Arbeitsstellung 7 oder eine Zwischenstellung, überführbar ist, wobei das wenigstens eine Funktionselement 3 in der Endstellung, beispielsweise der Arbeitsstellung 7 oder der Zwischenstellung, teilweise in der Prozesskammer 4 und teilweise außerhalb der Prozesskammer 4 angeordnet ist. Die Erfindung ist somit besonders geeignet für aseptische Prozesse in der pharmazeutischen Industrie, ist jedoch nicht auf diesen Bereich beschränkt.
- 1: Isolator
- 2: Transfervorrichtung
- 3: Funktionselement
- 4: Prozesskammer
- 5: Elementträger
- 6: Ausgangsstellung
- 7: Arbeitsstellung
- 8: Ausgangskammer
- 9: Ausgabeelement
- 10: Dosierstation
- 11: Nadel
- 12: Zuleitung
- 13: Mediumsleitung
- 14: Fortsatz
- 15: Transferöffnung
- 16: Trennwand
- 17: Verbindungsstück
- 18: Dichtelemente
- 19: Schleuse
- 20: Behältnis
- 21: Transportvorrichtung
- 22: Leitung
- 23: Basisplatte
- 24: Verschlussdeckel
- 25: freier Abschnitt eines Funktionselements 3
- 26: Boden

## Patentansprüche

1. Transfervorrichtung (2) zum Überführen wenigstens eines Funktionselements (3) in eine Prozesskammer (4), wobei das wenigstens eine Funktionselement (3) austauschbar an einem Elementträger (5) angeordnet ist und der Elementträger (5) aus einer Ausgangsstellung (6) in eine Endstellung, insbesondere eine Arbeitsstellung (7), überführbar ist, **dadurch gekennzeichnet, dass** die Transfervorrichtung das wenigstens eine Funktionselement (3) in der Endstellung, insbesondere der Arbeitsstellung (7) teilweise in der Prozesskammer (4) und teilweise außerhalb der Prozesskammer (4) anordnet.

2. Transfervorrichtung (2) zum Überführen wenigstens eines Funktionselements (3) in eine Prozesskammer (4), insbesondere nach Anspruch 1, wobei das wenigstens eine Funktionselement (3) austauschbar an einem Elementträger (5) angeordnet ist und der Elementträger (5) aus einer Ausgangsstellung (6) in einer Ausgangskammer (8) in eine Arbeitsstellung (7), überführbar ist, **wobei** das wenigstens eine Funktionselement (3) in der Arbeitsstellung (7) teilweise in der Prozesskammer (4) und teilweise außerhalb der Prozesskammer (4) angeordnet ist und das wenigstens eine Funktionselement (3) in der Arbeitsstellung (7) durch eine Transferöffnung (15) in die Prozesskammer ragt (4).

3. Transfervorrichtung (2) nach Anspruch 1, **dadurch gekennzeichnet, dass** das wenigstens eine Funktionselement (3) ein Ausgabeelement (9) einer Dosierstation (10) ist, insbesondere wobei das Ausgabeelement (9) als Nadel (11) ausgebildet ist.

4. Transfervorrichtung (2) nach einem der vorangegangenen Ansprüche, **dadurch gekennzeichnet, dass** das wenigstens eine Funktionselement (3) form- und/ oder kraftschlüssig an den Elementträger (5) angebracht ist.

5. Transfervorrichtung (2) nach einem der vorangegangenen Ansprüche, **dadurch gekennzeichnet, dass** das wenigstens eine Funktionselement (3) mit einer Zuleitung (12), insbesondere einer Mediumsleitung (13), verbunden ist.

6. Transfervorrichtung (2) nach einem der vorangegangenen Ansprüche, **dadurch gekennzeichnet, dass** das wenigstens eine Funktionselement (3) in seinem Verlauf wenigstens einen Richtungswechsel aufweist, insbesondere wobei der Richtungswechsel Teil der Leitung (22) ist und/oder durch einen Fortsatz (14) ausgebildet ist.

7. Transfervorrichtung (2) nach einem der Ansprüche 2 - 6, **dadurch gekennzeichnet, dass** die Transferöffnung (15) an einer senkrechten und/oder waagerechten und/oder schrägen Trennwand (16) der Prozesskammer (4) angeordnet ist.

8. Transfervorrichtung (2) nach einem der vorangegangenen Ansprüche, **dadurch gekennzeichnet, dass** das wenigstens eine Funktionselement (3) stufenweise in die Prozesskammer (4) überführbar ist.

9. Transfervorrichtung (2) nach einem der vorangegangenen Ansprüche, **dadurch gekennzeichnet, dass** das wenigstens eine Funktionselement (3) an dem Elementträger (5) vorzugsweise in die Prozesskammer (4) schwenkbar ist.

10. Transfervorrichtung (2) nach einem der vorangegangenen Ansprüche, **dadurch gekennzeichnet, dass** der Elementträger (5) wenigstens ein Verbindungsstück (17) aufweist, an dem das wenigstens eine Funktionselement (3) gehalten ist, insbesondere dass das wenigstens eine Funktionselement (3) winklig zu dem wenigstens einen Verbindungsstück (17) führbar ist, und/oder dass der Elementträger (5) vorzugsweise beabstandet zu einer, insbesondere der bereits erwähnten, Trennwand (16) angelenkt ist.

11. Transfervorrichtung (2) nach einem der vorangegangenen Ansprüche, **dadurch gekennzeichnet, dass** die Transferöffnung (15) durch die Bewegung des Elementträgers (5) in die Endstellung, insbesondere die Arbeitsstellung (7), abdichtbar ist, insbesondere, dass die Transferöffnung (15) durch den Elementträger (5) abdichtbar ist.

12. Transfervorrichtung (2) nach einem der vorangegangenen Ansprüche, **dadurch gekennzeichnet, dass** der Elementträger (5) Dichtelemente (18) aufweist und/oder dass Dichtelemente (18) an der Transferöffnung (15) und/oder an der Transfervorrichtung (2) angebracht sind.

13. Transfervorrichtung (2) nach einem der vorangegangenen Ansprüche, **dadurch gekennzeichnet, dass** sich die Transferöffnung (15) bei Nichtbenutzung durch die Transfervorrichtung (2) und/oder einem Verschlussdeckel (24) verschließen lässt.

14. Transfervorrichtung (2) nach einem der vorangegangenen Ansprüche, **dadurch gekennzeichnet, dass** wenigstens zwei Elementträger (5) mit jeweils einem Funktionselement (3) vorhanden sind, sodass die Funktionselemente (3) unabhängig voneinander in die Prozesskammer (4) überführbar, insbesondere schwenkbar, sind.

15. Transfervorrichtung (2) nach Anspruch 14, **dadurch gekennzeichnet, dass** mehr als zwei Elementträger (5), vorzugsweise acht oder vier Elementträger (5), in einem vorzugsweise regelmäßigen Abstand zueinander angeordnet sind.

16. Transfervorrichtung (2) nach einem der Ansprüche 13 oder 14, **dadurch gekennzeichnet, dass** die wenigstens zwei Funktionselemente (3) vorzugsweise unabhängig voneinander durch separate Transferöffnungen (15) in die Prozesskammer (4) überführbar sind.

17. Transfervorrichtung (2) nach einem der vorangegangenen Ansprüche, **dadurch gekennzeichnet, dass** das wenigstens eine Funktionselement (3) zumindest in einem freien Abschnitt (25) in der Endstellung, insbesondere der Arbeitsstellung (7), in schräger Ausrichtung und/oder parallel zu der Trennwand (16) ausgerichtet ist und/oder dass die Funktionselemente (3) eine längs der Trennwand (16) verlaufende Anordnung bilden.

18. Transfervorrichtung (2) nach einem der vorangegangenen Ansprüche, **dadurch gekennzeichnet, dass** die Prozesskammer (4) als Teil eines Isolators (1) ausgebildet ist und/oder dass die Transfervorrichtung (2) an einer oder der Trennwand (16) zwischen Prozesskammer (4) und einer Ausgangskammer (8) oder einer Schleuse (19) oder an einem Boden (26) der Prozesskammer (4) und/oder einer oder der Ausgangskammer (8) ausgebildet ist.

19. Transfervorrichtung (2) nach einem der vorangegangenen Ansprüche, **dadurch gekennzeichnet, dass** eine Überführung automatisiert ist.

20. Transfervorrichtung (2) nach einem der vorangegangenen Ansprüche, **dadurch gekennzeichnet, dass** das Funktionselement (3) während der Übergabe von der Transfervorrichtung (2) und von einer in der Prozesskammer (4) angeordneten Transportvorrichtung (21) gleichzeitig greifbar ist.

21. Transfervorrichtung (2) nach Anspruch 19, **dadurch gekennzeichnet, dass** das Funktionselement (3) während der Übergabe in der Transferöffnung (15) angeordnet ist.

22. Transfervorrichtung (2) nach einem der vorangegangenen Ansprüche, **dadurch gekennzeichnet, dass** die Prozesskammer (4) zu einer Aufnahme, insbesondere über eine Schleuse (19), und/oder einer Bearbeitung, insbesondere mit einer Dosierstation (10), wenigstens eines Behältnisses (20) ausgebildet ist.

23. Transfervorrichtung (2) nach einem der vorangegangenen Ansprüche, **dadurch gekennzeichnet, dass** die Prozesskammer (4) mit einem höheren Druck beaufschlagt ist und/oder ein Luftstrom aus der Prozesskammer (4) in die oder eine Ausgangskammer (8) oder eine Umgebung strömt und/oder dass die Prozesskammer (4) eine höhere Reinheitsstufe erfüllt als ihre Umgebung und/oder eine benachbarte Ausgangskammer (8) .

24. Verfahren zur Übergabe wenigstens eines Funktionselements (3) an einer Transferöffnung (15) zur Überführung in eine Prozesskammer (4), mit einer Transfervorrichtung (2) nach einem der Ansprüche 1 bis 23, wobei das Funktionselement (3) durch eine Transfervorrichtung (2) zu der Transferöffnung (15) überführt wird und das Funktionselement (3) anschließend von einer Transportvorrichtung (21) in die Prozesskammer (4) aufgenommen wird, **dadurch gekennzeichnet, dass** während der Übergabe die Transfervorrichtung (2) und die Transportvorrichtung (21) durch die Transferöffnung (15) getrennt sind.

25. Verfahren nach Anspruch 24, **dadurch gekennzeichnet, dass** das Funktionselement (3) während der Übergabe in der Transferöffnung (15) positioniert ist.

26. Verfahren nach einem der vorangegangenen Verfahrensansprüche, **dadurch gekennzeichnet, dass** das Funktionselement (3) während der Übergabe teilweise in eine Ausgangskammer (8) und teilweise in die Prozesskammer (4) ragt.

27. Verfahren nach einem der vorangegangenen Verfahrensansprüche, **dadurch gekennzeichnet, dass** während der Übergabe der Elementträger (5) der Transfervorrichtung (2) das Funktionselement (3) an einem anderen Griffpunkt greift als der Elementträger (5) der Transportvorrichtung (21).

28. Verfahren nach einem der vorangegangenen Verfahrensansprüche, **dadurch gekennzeichnet, dass**, vorzugsweise zu einem Befüllen, wenigstens ein Behältnis (20) in die Prozesskammer (4) eingeführt und/oder in der Prozesskammer (4) bereitgestellt wird.

29. Verwendung einer Transfervorrichtung (2), gemäß einer Transfervorrichtung (2) nach den Ansprüchen 1 bis 23 und/oder in einem Verfahren gemäß der Ansprüche 24 bis 28, wobei nach einer zumindest teilweisen Überführung des wenigstens einen Funktionselements (3) in die Prozesskammer (4) das wenigstens eine Funktionselement (3) vorzugsweise in der Ausgangskammer (8) mit einer Zuleitung (12) verbunden wird.

## Claims

1. Transfer device (2) for transferring at least one functional element (3) into a process chamber (4), wherein the at least one functional element (3) is arranged in an exchangeable manner on an element carrier (5) and the element carrier (5) can be transferred from a starting position (6) into an end position, in particular a working position (7), **characterized in that** the transfer device arranges the at least one functional element (3) in the end position, in particular the working position (7), partly in the process chamber (4) and partly outside the process chamber (4).

2. Transfer device (2) for transferring at least one functional element (3) into a process chamber (4), in particular according to claim 1, wherein the at least one functional element (3) is arranged in an exchangeable manner on an element carrier (5) and the element carrier (5) can be transferred from a starting position (6) in a starting chamber (8) into a working position (7), **wherein** the at least one functional element (3) is arranged in the working position (7) partly in the process chamber (4) and partly outside the process chamber (4), and the at least one functional element (3) protrudes into the process chamber (4) through a transfer opening (15) in the working position (7).

3. Transfer device (2) according to claim 1, **characterized in that** the at least one functional element (3) is a dispensing element (9) of a dosing station (10), in particular wherein the dispensing element (9) is designed as a needle (11).

4. Transfer device (2) according to one of the preceding claims, **characterized in that** the at least one functional element (3) is attached to the element carrier (5) in a form-fitting and/or force-fitting manner.

5. Transfer device (2) according to one of the preceding claims, **characterized in that** the at least one functional element (3) is connected to a supply line (12), in particular a medium line (13).

6. Transfer device (2) according to one of the preceding claims, **characterized in that** the at least one functional element (3) has at least one change of direction in its course, in particular wherein the change of direction is part of the line (22) and/or is formed by an extension (14).

7. Transfer device (2) according to one of claims 2-6, **characterized in that** the transfer opening (15) is arranged on a vertical and/or horizontal and/or inclined partition wall (16) of the process chamber (4).

8. Transfer device (2) according to one of the preceding claims, **characterized in that** the at least one functional element (3) can be transferred stepwise into the process chamber (4).

9. Transfer device (2) according to one of the preceding claims, **characterized in that** the at least one functional element (3) on the element carrier (5) can preferably be pivoted into the process chamber (4).

10. Transfer device (2) according to one of the preceding claims, **characterized in that** the element carrier (5) has at least one connecting piece (17) on which the at least one functional element (3) is held, in particular **in that** the at least one functional element (3) can be guided at an angle to the at least one connecting piece (17), and/or **in that** the element carrier (5) is preferably hinged at a distance from a partition wall (16), in particular the partition wall (16) already mentioned.

11. Transfer device (2) according to one of the preceding claims, **characterized in that** the transfer opening (15) can be sealed by the movement of the element carrier (5) into the end position, in particular the working position (7), in particular **in that** the transfer opening (15) can be sealed by the element carrier (5).

12. Transfer device (2) according to one of the preceding claims, **characterized in that** the element carrier (5) has sealing elements (18) and/or **in that** sealing elements (18) are attached to the transfer opening (15) and/or to the transfer device (2).

13. Transfer device (2) according to one of the preceding claims, **characterized in that** the transfer opening (15) can be closed by the transfer device (2) and/or a closure cover (24) when not in use.

14. Transfer device (2) according to one of the preceding claims, **characterized in that** at least two element carriers (5) are provided, each with a functional element (3), so that the functional elements (3) can be transferred into the process chamber (4) independently of one another, in particular pivotably.

15. Transfer device (2) according to claim 14, **characterized in that** more than two element carriers (5), preferably eight or four element carriers (5), are arranged at a preferably regular distance from each other.

16. Transfer device (2) according to one of claims 13 or 14, **characterized in that** the at least two functional elements (3) can preferably be transferred independently of one another through separate transfer openings (15) into the process chamber (4).

17. Transfer device (2) according to one of the preceding claims, **characterized in that** the at least one functional element (3) is aligned at least in a free section (25) in the end position, in particular the working position (7), at an angle and/or parallel to the partition wall (16) and/or **in that** the functional elements (3) form an arrangement extending along the partition wall (16).

18. Transfer device (2) according to one of the preceding claims, **characterized in that** the process chamber (4) is designed as part of an isolator (1) and/or **in that** the transfer device (2) is formed on one or the partition wall (16) between the process chamber (4) and a starting chamber (8) or an airlock (19) or on a floor (26) of the process chamber (4) and/or one or the starting chamber (8).

19. Transfer device (2) according to one of the preceding claims, **characterized in that** a transfer is automated.

20. Transfer device (2) according to one of the preceding claims, **characterized in that** the functional element (3) can be grasped simultaneously by the transfer device (2) and by a transport device (21) arranged in the process chamber (4) during the transfer.

21. Transfer device (2) according to claim 19, **characterized in that** the functional element (3) is arranged in the transfer opening (15) during the transfer.

22. Transfer device (2) according to one of the preceding claims, **characterized in that** the process chamber (4) is designed for receiving, in particular via an airlock (19), and/or processing, in particular with a dosing station (10), at least one container (20).

23. Transfer device (2) according to one of the preceding claims, **characterized in that** the process chamber (4) is subjected to a higher pressure and/or an air flow flows from the process chamber (4) into the or a starting chamber (8) or an environment and/or **in that** the process chamber (4) meets a higher cleanliness level than its environment and/or an adjacent starting chamber (8).

24. Method for transferring at least one functional element (3) to a transfer opening (15) for transfer into a process chamber (4), having a transfer device (2) according to one of claims 1 to 23, wherein the functional element (3) is transferred to the transfer opening (15) by a transfer device (2) and the functional element (3) is then picked up by a transport device (21) into the process chamber (4), **characterized in that** during the transfer, the transfer device (2) and the transport device (21) are separated by the transfer opening (15).

25. Method according to claim 24, **characterized in that** the functional element (3) is positioned in the transfer opening (15) during the transfer.

26. Method according to one of the preceding method claims, **characterized in that** during the transfer the functional element (3) protrudes partially into a starting chamber (8) and partially into the process chamber (4).

27. Method according to one of the preceding method claims, **characterized in that** during the transfer, the element carrier (5) of the transfer device (2) grips the functional element (3) at a different gripping point than the element carrier (5) of the transport device (21).

28. Method according to one of the preceding method claims, **characterized in that**, preferably for filling, at least one container (20) is introduced into the process chamber (4) and/or provided in the process chamber (4).

29. Use of a transfer device (2), according to a transfer device (2) according to claims 1 to 23 and/or in a method according to claims 24 to 28, wherein, after at least partial transfer of the at least one functional element (3) into the process chamber (4), the at least one functional element (3) is preferably connected to a supply line (12) in the starting chamber (8).

## Revendications

1. Dispositif de transfert (2) pour faire passer au moins un élément fonctionnel (3) dans une chambre de traitement (4), dans lequel l'au moins un élément fonctionnel (3) est disposé de façon interchangeable sur un support d'élément (5) et le support d'élément (5) peut être amené d'une position de départ (6) à une position finale, en particulier une position de travail (7), **caractérisé en ce que** le dispositif de transfert place l'au moins un élément fonctionnel (3) en partie dans la chambre de traitement (4) et en partie à l'extérieur de la chambre de traitement (4) dans la position finale, en particulier dans la position de travail (7).

2. Dispositif de transfert (2) pour le transfert d'au moins un élément fonctionnel (3) dans une chambre de traitement (4), en particulier selon la revendication 1, dans lequel l'au moins un élément fonctionnel (3)est disposé de façon interchangeable sur un support d'élément (5) et le support d'élément (5) peut être amené d'une position de départ (6) dans une chambre de départ (8) à une position de travail (7), dans lequel l'au moins un élément fonctionnel (3) est disposé en partie dans la chambre de traitement (4) et en partie à l'extérieur de la chambre de traitement (4) dans la position de travail (7) et l'au moins un élément fonctionnel (3) dépasse dans la chambre de traitement (4) à travers une ouverture de transfert (15) dans la position de travail (7).

3. Dispositif de transfert (2) selon la revendication 1, **caractérisé en ce que** l'au moins un élément fonctionnel (3) est un élément distributeur (9) d'une station de dosage (10), en particulier dans lequel l'élément distributeur (9) est conçu comme une aiguille (11).

4. Dispositif de transfert (2) selon l'une des revendications précédentes, **caractérisé en ce que** l'au moins un élément fonctionnel (3) est mis en place par engagement positif et/ou par friction sur le support d'élément (5).

5. Dispositif de transfert (2) selon l'une des revendications précédentes, **caractérisé en ce que** l'au moins un élément fonctionnel (3) est relié à une conduite d'alimentation (12), en particulier une conduite de fluide (13).

6. Dispositif de transfert (2) selon l'une des revendications précédentes, **caractérisé en ce que** la forme de l'au moins un élément fonctionnel (3) présente au moins un changement de direction, qui fait en particulier partie de la conduite (22) et/ou est formé par une saillie (14).

7. Dispositif de transfert (2) selon l'une des revendications 2 à 6, **caractérisé en ce que** l'ouverture de transfert (15) est disposée sur une cloison (16) verticale et/ou horizontale et/ou oblique de la chambre de traitement (4).

8. Dispositif de transfert (2) selon l'une des revendications précédentes, **caractérisé en ce que** l'au moins un élément fonctionnel (3) peut être transféré par étapes dans la chambre de traitement (4).

9. Dispositif de transfert (2) selon l'une des revendications précédentes, **caractérisé en ce que** l'au moins un élément fonctionnel (3) peut être basculé sur le support d'élément (5), de préférence dans la chambre de traitement (4).

10. Dispositif de transfert (2) selon l'une des revendications précédentes, **caractérisé en ce que** le support d'élément (5) comporte au moins un raccord (17) sur lequel l'au moins un élément fonctionnel (3) est retenu, en particulier **en ce que** l'au moins un élément fonctionnel (3) peut être amené sous un angle vers l'au moins un raccord (17) et/ou **en ce que** le support d'élément (5) est de préférence articulé à distance d'une cloison, en particulier de la cloison (16) déjà mentionnée.

11. Dispositif de transfert (2) selon l'une des revendications précédentes, **caractérisé en ce que** l'ouverture de transfert (15) peut être fermée hermétiquement par le déplacement du support d'élément (5) dans la position finale, en particulier la position de travail (7), en particulier **en ce que** l'ouverture de transfert (15) peut être fermée hermétiquement par le support d'élément (5).

12. Dispositif de transfert (2) selon l'une des revendications précédentes, **caractérisé en ce que** le support d'élément (5) comporte des éléments d'étanchéité (18) et/ou **en ce que** des éléments d'étanchéité (18) sont mis en place sur l'ouverture de transfert (15) et/ou sur le dispositif de transfert (2).

13. Dispositif de transfert (2) selon l'une des revendications précédentes, **caractérisé en ce que** l'ouverture de transfert (15), quand elle n'est pas utilisée, peut être obturée par le dispositif de transfert (2) et/ou par un couvercle d'obturation (24).

14. Dispositif de transfert (2) selon l'une des revendications précédentes, **caractérisé en ce qu'**au moins deux supports d'élément (5) munis chacun d'un élément fonctionnel (3) sont prévus, de sorte que les éléments fonctionnels (3) peuvent être transférés, en particulier basculés, dans la chambre de traitement (4) indépendamment l'un de l'autre.

15. Dispositif de transfert (2) selon la revendication 14, **caractérisé en ce que** plus de deux supports d'élément (5), de préférence huit ou quatre supports d'élément (5), sont disposés à intervalles de préférence réguliers les uns des autres.

16. Dispositif de transfert (2) selon l'une des revendications 13 ou 14, **caractérisé en ce que** les au moins deux éléments fonctionnels (3) peuvent de préférence être transférés dans la chambre de traitement (4) indépendamment l'un de l'autre par des ouvertures de transfert (15) séparées.

17. Dispositif de transfert (2) selon l'une des revendications précédentes, **caractérisé en ce que** l'au moins un élément fonctionnel (3) est orienté à l'oblique et/ou parallèlement à la cloison (16), au moins dans une partie libre (25), dans la position finale, en particulier la position de travail (7), et/ou **en ce que** les éléments fonctionnels (3) forment une disposition courant le long de la cloison (16).

18. Dispositif de transfert (2) selon l'une des revendications précédentes, **caractérisé en ce que** la chambre de traitement (4) est conçue comme une partie d'un isolateur (1) et/ou **en ce que** le dispositif de transfert (2) est formé sur une ou la cloison (16) entre la chambre de traitement (4) et une chambre de départ (8) ou sur un sas (19) ou sur un fond (26) de la chambre de traitement (4) et/ou d'une ou de la chambre de départ (8).

19. Dispositif de transfert (2) selon l'une des revendications précédentes, **caractérisé en ce qu'**un transfert est automatisé.

20. Dispositif de transfert (2) selon l'une des revendications précédentes, **caractérisé en ce que** l'élément fonctionnel (3) peut être saisi simultanément pendant le transfert par le dispositif de transfert (2) et par un dispositif de transport (21) disposé dans la chambre de traitement (4).

21. Dispositif de transfert (2) selon la revendication 19, **caractérisé en ce que** l'élément fonctionnel (3) est disposé dans l'ouverture de transfert (15) pendant le transfert.

22. Dispositif de transfert (2) selon l'une des revendications précédentes, **caractérisé en ce que** la chambre de traitement (4) est conçue pour recevoir, en particulier via un sas (19), et/ou traiter, en particulier avec une station de dosage (10), au moins un récipient (20).

23. Dispositif de transfert (2) selon l'une des revendications précédentes, **caractérisé en ce que** la chambre de traitement (4) est soumise à une pression plus élevée et/ou un courant d'air circule de la chambre de traitement (4) vers la ou une chambre de départ (8) ou un environnement et/ou **en ce que** la chambre de traitement (4) est conforme à un niveau de propreté plus élevé que son environnement et/ou qu'une chambre de départ (8) voisine.

24. Procédé pour amener au moins un élément fonctionnel (3) à une ouverture de transfert (15) en vue du transfert dans une chambre de traitement (4), avec un dispositif de transfert (2) selon l'une des revendications 1 à 23, dans lequel l'élément fonctionnel (3) est amené à l'ouverture de transfert (15) par un dispositif de transfert (2) et l'élément fonctionnel (3) est ensuite reçu par un dispositif de transport (21) dans la chambre de traitement (4), **caractérisé en ce que**, pendant le transfert, le dispositif de transfert (2) et le dispositif de transport (21) sont séparés par l'ouverture de transfert (15).

25. Procédé selon la revendication 24, **caractérisé en ce que** l'élément fonctionnel (3) est positionné dans l'ouverture de transfert (15) pendant le transfert.

26. Procédé selon l'une des revendications de procédé précédentes, **caractérisé en ce que** l'élément fonctionnel (3) dépasse partiellement dans une chambre de départ (8) et partiellement dans la chambre de traitement (4) pendant le transfert.

27. Procédé selon l'une des revendications de procédé précédentes, **caractérisé en ce que** le support d'élément (5) du dispositif de transfert (2) saisit l'élément fonctionnel (3) en un point de prise différent du support d'élément (5) du dispositif de transport (21) pendant le transfert.

28. Procédé selon l'une des revendications de procédé précédentes, **caractérisé en ce que**, de préférence pour un remplissage, au moins un récipient (20) est introduit dans la chambre de traitement (4) et/ou présenté dans la chambre de traitement (4).

29. Utilisation d'un dispositif de transfert (2), selon un dispositif de transfert (2) selon les revendications 1 à 23 et/ou dans un procédé selon les revendications 24 à 28, dans laquelle, après un transfert au moins partiel de l'au moins un élément fonctionnel (3) dans la chambre de traitement (4), l'au moins un élément fonctionnel (3) est de préférence relié à une conduite d'alimentation (12) dans la chambre de départ (8).
